(19) Europäisches Patentamt
European Patent Office
Office européen des brevets

(11) Veröffentlichungsnummer: **0 017 011**
**A1**

# (12) EUROPÄISCHE PATENTANMELDUNG

(21) Anmeldenummer: **80101200.6**

(22) Anmeldetag: **10.03.80**

(51) Int. Cl.³: **A 01 N 59/00**, A 01 N 47/06
// (A01N59/00, 47/06)

(30) Priorität: **22.03.79 DE 2911208**

(43) Veröffentlichungstag der Anmeldung: **15.10.80**
**Patentblatt 80/21**

(84) Benannte Vertragsstaaten: **AT BE CH DE FR GB IT NL SE**

(71) Anmelder: **BAYER AG, Zentralbereich Patente, Marken und Lizenzen, D-5090 Leverkusen 1, Bayerwerk (DE)**

(72) Erfinder: **Radt, Walter, Dr., Betheistrasse 12, D-4150 Krefeld (DE)**
Erfinder: **Genth, Hermann, Dr., Am Heckerhof 60, D-4150 Krefeld (DE)**

(54) **Mikrobizides Mittel und seine Verwendung.**

(57) Die Erfindung betrifft ein mikrobizides Mittel, enthaltend eine Peroxoverbindung und einen Dikohlensäuredialkylester und/oder deren primäre Umsetzungsprodukte.

EP 0 017 011 A1

0017011

BAYER AKTIENGESELLSCHAFT
Zentralbereich
Patente, Marken und Lizenzen

5090 Leverkusen, Bayerwerk
Mn/bc

Mikrobizides Mittel und seine Verwendung

Die Erfindung betrifft ein neues mikrobizides Mittel und seine Verwendung in Reinigungs- und/oder Desinfektionsmitteln.

Aus der DE-PS 1 011 709 ist bekannt, daß Dialkyldicarbonate eine mikrobizide Wirksamkeit haben. Sie werden im wesentlichen für die Kaltsterilisation von Getränken und Enzymlösungen verwendet.

Aus "Sterilisation-Desinfektion-Konservierung-Chemotherapie" (Wallhäuser, Schmidt, Georg Thieme Verlag, Stuttgart (1967) Seite 141) ist ferner bekannt, Peroxoverbindungen, wie Wasserstoffperoxid, Percarbonat und Perborate als Desinfektionsmittel zu verwenden. Es ist jedoch aus der DE-OS 1 800 069 bekannt, daß der Aktivsauerstoff in den Peroxoverbindungen erst bei Temperaturen oberhalb von 70°C und vorzugsweise im Bereich

von 80 bis 100°C mit einer für Praxiszwecke ausreichenden Geschwindigkeit wirksam ist, so daß sich diese Oxidations-, Bleich- und Waschflüssigkeiten nicht bei temperaturempfindlichen Materialien anwenden lassen.

Zur Behebung dieses Nachteils werden Aktivatoren, wie halogensubstituierte ß-Lactone (DE-OS 1 800 069), N-Benzoyl-2-methyl-imidazole (DE-OS 2 219 595) oder Acyloxicarbonsäuren (DE-OS 2 701 133) eingesetzt. Da diese Verbindungen bei dem Einsatz als Reinigungs- und/oder Desinfektionsmittel nicht verbraucht oder nach dem Einsatz zurückgewonnen werden, stellen sie eine Belastung der Umwelt dar.

Es wurden mikrobizide Mittel gefunden, die eine Peroxoverbindung und einen Dikohlensäuredialkylester und/oder deren direkte Umsetzungsprodukte enthalten.

Peroxoverbindungen für das erfindungsgemäße mikrobizide Mittel können beispielsweise Peroxide und Peroxohydrate sein. Als Peroxide seien beispielsweise Wasserstoffperoxid und die Peroxide der Alkalimetalle genannt. Als Peroxohydrate seien beispielsweise die Alkali- und Ammonium-percarbonate, -perborate, - perphosphate, -perphosphonate und -persilikate genannt. Als Alkali sei hier insbesondere Lithium, Natrium und Kalium genannt.

Besonders bevorzugte Peroxoverbindungen für die erfindungsgemäßen mikrobiziden Mittel sind Wasserstoffperoxid, Natriumpercarbonat und Natriumperborat.

Es ist selbstverständlich auch möglich, Mischungen der einzelnen Peroxoverbindungen einzusetzen.

Die Herstellung der Peroxoverbindungen für die erfindungsgemäßen mikrobiziden Mittel ist an sich bekannt (Chemiker Zeitung <u>99</u>, 120 ff (1975)).

Als Dikohlensäuredialkylester für die erfindungsgemäßen mikrobiziden Mittel seien beispielsweise Verbindungen der Formel

$$R^1-O-\overset{O}{\overset{\|}{C}}-O-\overset{O}{\overset{\|}{C}}-OR^2 \qquad (I)$$

worin

$R^1$ und $R^2$ gleich oder verschieden sind und für einen niederen Alkylrest stehen,

genannt.

Niedere Alkylreste können geradkettige oder verzweigte Kohlenwasserstoffreste mit 1 bis etwa 6 Kohlenstoffatomen sein. Beispielsweise seien als niedere Alkylreste Methyl, Ethyl, Propyl, Isopropyl, Butyl, Isobutyl, Pentyl, Isopentyl, Hexyl und Isohexyl genannt. Bevorzugte

Dikohlensäuredialkylester für die erfindungsgemäßen mikrobiziden Mittel sind der Dikohlensäuredimethylester, der Dikohlensäurediethylester und der Dikohlensäuredi-n-propylester.

Bei einer Mischung der Peroxoverbindungen mit den Dikohlensäuredialkylestern können gegebenenfalls ganz oder teilweise primäre Umsetzungsprodukte entstehen, die Teile des erfindungsgemäßen Mittels sind. Als primäre Umsetzungsprodukte seien beispielsweise Perkohlensäureester der Formel

$$R^1\text{-O-}\overset{O}{\overset{\|}{C}}\text{-O-OH} \qquad (II)$$

worin

$R^1$ die obengenannte Bedeutung hat,

genannt, deren Herstellung aus der BE 631 982 bekannt ist. Die Perkohlensäureester der Formel (II) können selbstverständlich auch allein Bestandteil des erfindungsgemäßen mikrobiziden Mittels sein. Da die Perkohlensäureester jedoch, durch ihre Instabilität bedingt, nur schwer in reinem Zustand über eine längere Zeit zu erhalten sind, werden sie im allgemeinen nur Teil des erfindungsgemäßen mikrobiziden Mittels sein.

Bevorzugte erfindungsgemäße mikrobizide Mittel erhält man durch Mischen der Peroxoverbindung mit dem Dikohlensäuredialkylester. Sie können Perkohlensäureester der Formel II enthalten.

In einer bevorzugten Form der Herstellung der erfindungsgemäßen mikrobiziden Mittel mischt man die Peroxoverbindung und den Dikohlensäuredialkylester kurz (d.h. beispielsweise in einem Zeitraum von 15 Minuten)vor der Anwendung. In einer anderen bevorzugten Form der Herstellung des erfindungsgemäßen mikrobiziden Mittels erfolgt das Mischen unmittelbar in dem zu reinigenden und/oder zu desinfizierenden Gegenstand, z.B. einem Tank, oder in einem Behälter, in dem sich die Gegenstände befinden.

In dem erfindungsgemäßen mikrobiziden Mittel können die Peroxoverbindungen und der Dikohlensäuredialkylester in beliebiger Reihenfolge nacheinander oder gleichzeitig gemischt werden. Das molare Gewichtsverhältnis der Peroxoverbindung zu dem Dikohlensäurediester kann im Bereich von 10:1 bis 1:10 liegen, vorzugsweise werden jedoch stöchiometrische Mengen verwandt. Im wesentlichen abhängig von der eingesetzten Peroxoverbindung haben die erfindungsgemäßen mikrobiziden Mittel im allgemeinen einen pH-Wert von 5 bis 13, bevorzugt von 6 bis 8.

Die Konzentration an Aktivsauerstoff (berechnet als Wasserstoffperoxid) in den Gebrauchslösungen kann je nach Anwendungsgebiet zwischen 1 ppm bis 1000 ppm betragen.

Die erfindungsgemäßen mikrobiziden Mittel sind wirksam gegen Bakterien, Pilze, Algen und Viren. Als Mikroorganismen seien beispielsweise genannt:
Bakterien vom Typ Escherichia, wie Escherichia coli, Pseudomonas, wie Pseudomonas aeruginosa, und Staphylococcus, wie Staphylococcus aureus;

Pilze vom Typ Saccaromyces, wie Saccharomyces cerevisiae, Aspergillus, wie Aspergillus niger, Chaetonium, wie Chaetonium globosum, und Penicillium, wie Penicillium glaucum;

Algen vom Typ Euglena, wie Euglena viridis, und Chlorococcus, wie Chlorococcus humicola.

Es seien auch Mikroorganismen genannt, die Schleime bilden, wie
Flavobakterium flavescem, Aerobacter aerogenes, Bacillus subtilis.

Die erfindungsgemäßen Mittel können mit üblichen Lösungs- oder Verdünnungsmitteln, insbesondere auch Reinigungskomponenten, gemischt werden. Beispielsweise seien genannt:
Alkohole, Glykole, anionische und nichtanionische Tenside, Gerüststoffe, wie Phosphate, Phosphonate und Carboximethyl-cellulose, Komplexbildner, Korrosionsschutzstoffe, Carbonate, Borate, Silikate und Weißtöner.

Die erfindungsgemäßen mikrobiziden Mittel können selbstverständlich auch mit anderen mikrobiziden Wirkstoffen gemischt werden. Beispielsweise seien genannt:
quaternäre Ammoniumverbindungen, Amphotenside, p-Hydroxybenzoesäureester, Phenole und zinnorganische Verbindungen.

Die erfindungsgemäßen mikrobiziden Mittel werden besonders als Desinfektionsmittel eingesetzt. Sie können beispielsweise als Desinfektionsmittel in Lebensmittelbetrieben, zur Desinfektion chirurgischer Instrumente, zur Desinfektion von Wand-, Boden- sowie anderer Flächen im Krankenhausbereich und Haushalt verwandt werden. Es ist auch möglich, sie zur Schleimbekämpfung in Kühlwassersystemen und im Wassersystem von Papier- und Zellstofffabriken einzusetzen.

Die erfindungsgemäßen mikrobiziden Mittel zerfallen in Wasser vollständig in Kohlensäure, Wasser und Alkohol, Verbindungen die die Umwelt nicht belasten. Bei der Anwendung der erfindungsgemäßen mikrobiziden Mittel ergeben sich deshalb keine Rückstandsprobleme.

Überraschenderweise haben die erfindungsgemäßen mikrobiziden Mittel eine größere (synergistische) Wirkung im Vergleich zu den Einzelkomponenten, also der Peroxoverbindung und dem Dikohlensäuredialkylester. Sie sind daher besonders als mikrobizide Mittel geeignet.

Beispiel 1

Die Umsetzung von Wasserstoffperoxid mit Dikohlensäureestern kann durch die getrennte Bestimmung von Gesamtaktivsauerstoff und Perkohlensäureester bestimmt werden.

a) Titration des Perkohlensäureesters

100 ml Probelösung werden auf ein Gemisch aus 250 g Eis und 15 ml Eisessig gegeben. Nach Zugabe von 0,35 g Kaliumjodid titriert man mit n/10 Natriumthiosulfat.

b) Titration des Gesamtaktivsauerstoffs

30 ml destilliertes Wasser mit 0,35 g Kaliumjodid werden vorgelegt, mit 20 ml 2 n Schwefelsäure angesäuert und langsam 100 ml Probelösung zugesetzt. Nach Zusatz von drei Tropfen gesättigter Ammoniummolybdatlösung wird mit n/10 Thiosulfatlösung gegen Stärke als Indikator titriert.

Eine Mischung aus 1,0 g Natriumpercarbonat (= 7,55 m Mol $H_2O_2$) und 1,07 g (8 m Mol) Dimethyldicarbonat in 1 l destilliertem Wasser wurde bei Raumtemperatur im Abstand von 15 Minuten titriert nach Methode a) und b).

| Zeit (min) | Verbrauch $\frac{n}{10}$ Thiosulfat (ml) a) | b) |
|---|---|---|
| 15 | 11,8 | 14,55 |
| 30 | 12,3 | 14,05 |
| 45 | 12,1 | 13,40 |

Die Vergleichsprobe ohne Zusatz von Dimethyldicarbonat ergab:

| Zeit (min) | Verbrauch $\frac{n}{10}$ a) | Thiosulfat (ml) b) |
|---|---|---|
| 15 | 0,1 | 15,05 |
| 30 | 0,1 | 14,95 |
| 45 | 0,1 | 14,85 |

Beispiel 2

Eine Mischung aus 1,0 g Natriumpercarbonat und 0,97 g (6 m Mol) Diethyldicarbonat in 1 l destilliertem Wasser wurde bei Raumtemperatur im Abstand von 15 Minuten titriert nach Methode a) und b).

| Zeit (min) | Verbrauch an $\frac{n}{10}$ a) | Thiosulfat (ml) b) |
|---|---|---|
| 15 | 10,65 | 14,70 |
| 30 | 11,50 | 14,35 |
| 45 | 11,90 | 14,30 |

Beispiel 3

Eine Mischung aus 1,0 g Natriumpercarbonat und 1,14 g (6 m Mol) Di-n-propyldicarbonat in 1 l destilliertem Wasser wurde im Abstand von 15 Minuten nach Methode a) und b) titriert.

| Zeit (min) | Verbrauch an $\frac{n}{10}$ a) | Thiosulfat (ml) b) |
|---|---|---|
| 15 | 8,60 | 13,95 |
| 30 | 9,50 | 13,85 |
| 45 | 11,10 | 13,85 |

Beispiel 4

1,0 g Natriumpercarbonat (7,55 m Mol $H_2O_2$) werden in 1 l destilliertem Wasser gelöst und eine Lösung von 1,0 g Dimethyldicarbonat (8 m Mol) in 0,5 l destilliertem Wasser auf einmal zugesetzt. Der pH-Wert wird in Abhängigkeit von der Zeit bestimmt.

| Zeit (sek) | pH |
|---|---|
| - 0 | 10,65 |
| 15 | 7,20 |
| 210 | 7,00 |

Beispiel 5

Um die Desinfektionswirkung der Wirkstoffkombination aus Perverbindung und Dimethyldicarbonat (DMDC) aufzuzeigen, wurde die Gesamtkeimzahl eines natürlichen Oberflächenwassers mit und ohne Zusatz in Abhängigkeit von der Zeit bestimmt.

| Oberflächenwasser | Keimzahlen ml Anfang | nach 2 Std. | nach 6 Std. |
|---|---|---|---|
| a) ohne Zusatz | 6 800 000 | 3 900 000 | 2 400 000 |
| b) + 50 ppm Natriumpercarbonat | - | 1 200 000 | 950 000 |
| c) + 10 ppm DMDC | - | 460 000 | 140 000 |
| d) + 50 ppm Natriumpercarbonat + 10 ppm DMDC | - | 355 | 620 |

Die Wasserproben blieben nach der Zugabe in 100 ml Glasflaschen verschlossen bei Raumtemperatur bis zur Probenahme stehen. Die Proben d und b enthalten den gleichen Anteil Aktivsauerstoff. Daß das auffallend gute Ergebnis von d im Vergleich zu b nicht nur auf der additiven Wirkung beider Komponenten, sondern auf der Bildung einer neuen Perverbindung beruht, geht aus den Beispielen 1 und 5 eindeutig hervor.

Beispiel 6

Die mikrobizide Wirksamkeit wurde im Suspensionsversuch nach den Richtlinien der DGHM (Literatur für die Prüfung chemischer Desinfektionsmittel (Deutsche Gesellschaft für Hygiene und Mikrobiologie, Gustav Fischer Verlag, Stuttgart (1972)) bestimmt.

Nährmedium: Kaseinpepton-Sojabohnenmehlpepton-Lösung

Testkeime: Staphylococcus aurens
Escherichia coli

Einwirkungszeiten: 2 1/2, 5, 15 und 30 Minuten.

a) Lösung von 0,1 g Na-percarbonat in 200 ml destilliertem $H_2O$. Keine Abtötung bis 30 Minuten Einwirkungszeit.

b) Lösung von 0,1 g Na-percarbonat und 0,1 g Dimethyldicarbonat in 200 ml destilliertem $H_2O$ nach 15 Minuten Standzeit.

Vollständige Abtötung bei allen Prüfzeiten.

## Patentansprüche

1) Mikrobizides Mittel, enthaltend eine Peroxoverbindung und einen Dikohlensäuredialkylester und/oder deren primäre Umsetzungsprodukte.

2) Mikrobizides Mittel nach Anspruch 1, enthaltend Wasserstoffperoxid, Alkaliperoxid, Alkalipercarbonate, Alkaliperborate, Alkaliperphosphate, Alkaliperphosphonate und/oder Alkalipersilikat.

3) Mikrobizides Mittel nach Anspruch 1, enthaltend Dikohlensäuredialkylester der Formel

$$R^1-O-\overset{\overset{O}{\|}}{C}-O-\overset{\overset{O}{\|}}{C}-OR^2 \qquad (I)$$

worin
$R^1$ und $R^2$ gleich oder verschieden sind und für einen niederen Alkylrest stehen.

4) Mikrobizides Mittel nach Anspruch 1, enthaltend Perkohlensäureester der Formel

$$R^1-O-\overset{\overset{O}{\|}}{C}-O-OH \qquad (II)$$

worin
$R^1$ die obengenannte Bedeutung hat.

5) Mikrobizides Mittel nach Anspruch 1, dadurch gekennzeichnet, daß die Peroxoverbindung und der Dikohlensäuredialkylester im Verhältnis 10:1 bis 1:10 vorliegen.

6) Verwendung der mikrobiziden Mittel nach den Ansprüchen 1 bis 5 in Reinigungs- und/oder Desinfektionsmitteln.

7) Verfahren zur Verwendung der mikrobiziden Mittel nach den Ansprüchen 1 bis 5, dadurch gekennzeichnet, daß man die Peroxoverbindung und den Dikohlensäuredialkylester erst kurz vor der Behandlung des zu reinigenden und/oder zu desinfizierenden Gegenstandes mischt und dann den Gegenstand mit der so erhaltenen Flüssigkeit behandelt.

0017011

Nummer der Anmeldung

Europäisches Patentamt

# EUROPÄISCHER RECHERCHENBERICHT

EP 80 10 1200

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| X | FR - A - 2 090 369 (HENKEL)<br>* Patentanspruch 1; Seite 1, Zeilen 13-26; Seite 3, Zeilen 13-21; Seite 5, Zeilen 17-34; Seite 8, Zeilen 35, 36 *<br>-- | 1-3, 5-7 | A 01 N 59/00<br>47/06<br>(A 01 N 59/00, 47/06) |
| | DE - A - 2 227 602 (HOECHST)<br>* Patentansprüche *<br>-- | 1-7 | |
| D | BE - A - 631 982 (UNILEVER)<br>* Patentansprüche 1-6 *<br>-- | 1-3, 5-7 | **RECHERCHIERTE SACHGEBIETE (Int. Cl. ³)**<br>A 01 N 59/00<br>47/06<br>A 01 N + |
| DA | DE - B - 1 011 709 (BAYER)<br>* Das ganze Dokument *<br>---- | 1,3,6 | |

**KATEGORIE DER GENANNTEN DOKUMENTE**

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 14-07-1980 | MERGONI |